# EUROPEAN PATENT SPECIFICATION

(11) **EP 3 188 630 B1**
(45) Date of publication and mention of the grant of the patent: **28.04.2021**
(21) Application number: 15763744.8
(22) Date of filing: 02.09.2015
(51) Int. Cl.: A47J 43/07, B26D 1/28

(54) **BLADES AND BLADE ASSEMBLIES FOR A BLENDER**
KLINGEN UND KLINGENANORDNUNG FÜR EINEN MIXER
LAMES ET ENSEMBLES LAMES POUR MÉLANGEUR

(30) Priority: 05.09.2014 US 201462046389 P
(43) Date of publication of application: 12.07.2017
(73) Proprietor: SharkNinja Operating LLC, Needham, MA 02494 (US)
(72) Inventor: AUDETTE, David M., Webster, Massachusetts 01570 (US)
(74) Representative: Harris, Oliver John Richard
(86) International application number: PCT/US2015/048084
(87) International publication number: WO 2016/036816

(56) References cited:
- WO-A1-2013/120145
- US-A- 4 543 720

## Description

### BACKGROUND

The present disclosure relates to blades and blade assemblies for blenders.

Blenders are commonly used to process many different food products, including liquids, solids, semi-solids, gels, and the like. It is well-known that blenders are useful devices for blending, cutting, and dicing food products in a wide variety of commercial settings, including home kitchen use, professional restaurant or food services use, and large-scale industrial use. Blenders offer a convenient alternative to chopping or dicing by hand, and often come with a range of operational settings and modes adapted to provide specific types or amounts of food processing, *e.g.,* as catered to particular food products.

Typically, the blade assemblies in conventional blenders consist of two or more generally U-shaped blades joined together at a central point with their respective ends oriented in opposite directions. Improvements in motor power have enabled blending at higher blade rotations, measured as revolutions per minute (rpm). As such, users are able to blend an even wider variety of foods, including solid foods of increased density and frozen liquids, such as ice. The increased density of the food products being processed can require longer blending times. The increased torque and speed from the improved motors and the longer blend times can put greater stress on the blades and blade assemblies.

WO2013/120145 discloses a jug assembly for a blender.

### SUMMARY

The present invention relates to a blender blade according to claim 1 and to a blade assembly according to claim 14. The blender blade includes a body having an aperture; at least one cutting blade extending outwardly at an angle from the body, the cutting blade having a sharp edge, a blunt edge, and a cutting blade face therebetween; and a transition section between the body and the cutting blade defining the angle at which the cutting blade extends outwardly from the body, wherein the transition section includes a gusset.

In some embodiments, the gusset may have a generally circular shape. A radius of the gusset may be equal to or greater than a thickness of the transition section. The body, the cutting blade, and the transition section may be formed from a contiguous piece of metal. The gusset may be integrally formed on the transition section. The gusset may include a raised portion on a top surface of the transition section. The gusset may include a cavity on a bottom surface of the transition section. A portion of the gusset may extend into the cutting blade face. A portion of the gusset may extend into the body. The portion of the gusset extending into the body may be at least five millimeters from the aperture.

In further embodiments, the blender blade (which includes a body having an aperture defining an axis of rotation for the blender blade) comprises a first cutting blade extending outwardly at a first angle from the body; a first transition section between the body and the first cutting blade; a second cutting blade, opposite the first cutting blade, extending outwardly at a second angle from the body; a second transition section between the body and the second cutting blade; a first gusset disposed on the first transition section; and a second gusset disposed on the second transition section.

In some embodiments, the body, the first cutting blade, the first transition section, the second cutting blade, and the second transition section may be formed from a contiguous piece of metal. The first transition section may include a first bend defining the first angle and the second transition section may include a second bend defining the second angle. The first gusset may be disposed on the first bend and the second gusset may be disposed on the second bend. Each of the first and the second gussets may have a generally circular shape. A radius of each of the first and the second gussets may be equal to or greater than a thickness of each of the first and the second transition sections, respectively.

Also provided is a blade assembly for a blender comprising the features of claim 14. The blade assembly includes a hub having a central axis about which the blade assembly rotates, and a blender blade as described above, wherein the assembly comprises a plurality of cutting blades and a plurality of corresponding transition sections.

In some embodiments, the gusset may include a raised portion on a top surface of at least one of the transition sections. The gusset may include a cavity on a bottom surface of at least one of the transition sections. The blade assembly may further include at least one crushing blade extending longitudinally outwardly from the hub having a first edge, a second edge, and a crushing blade face therebetween.

### BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a top perspective view of a blender blade in accordance with an embodiment of the present disclosure;
FIG. 2 is a side perspective view of the blender blade of FIG. 1;
FIG. 3 is a bottom perspective view of the blender blade of FIG. 1;
FIG. 4 is a partially exploded perspective view of a blade assembly in accordance with an embodiment of the present disclosure; and
FIG. 5 is a top view of the blade assembly of FIG. 4.

### DETAILED DESCRIPTION

Aspects and embodiments disclosed herein are not limited to the details of construction and the arrangement of components set forth in the following description or illustrated in the drawings. The disclosed aspect and embodiments are capable of being practiced or of being carried out in various ways. The phraseology and terminology used herein is for the purpose of description and should not be regarded as limiting. The use of "including," "comprising," "having," "containing," "involving," and variations thereof herein is meant to encompass the items listed thereafter and equivalents thereof.

Aspects and embodiments disclosed herein include blades and blade assemblies for blending food products. It should be understood that although aspects and embodiments disclosed herein are described as apparatus for blenders, it should be understood that these aspects and embodiments may also or alternatively be utilized for the preparation or food products in other apparatus, such as mixers, food processors, slicers, or any other device for blending, cutting, dicing, mixing, or pureeing food products.

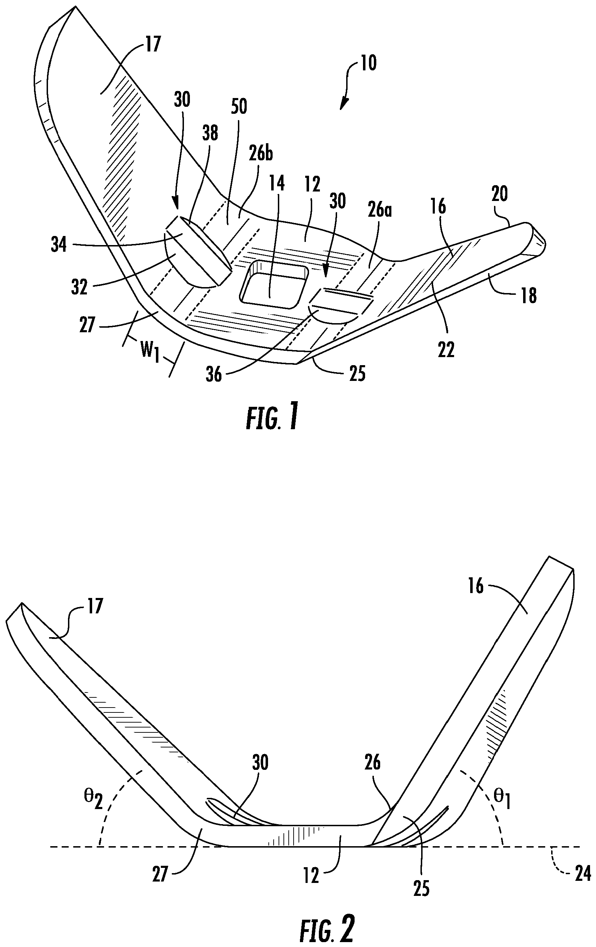

A blender blade 10 in accordance with an embodiment of the present disclosure is illustrated in FIGS. 1-3. The blender blade 10 includes a body 12 having an aperture 14. A first cutting blade 16 extends outwardly at a first angle from the body 12. A second cutting blade 17 extends outwardly at a second angle from the body 12. Each of the cutting blades has a sharp edge 18, a blunt edge 20, and a cutting blade face 22 between the edges. While two cutting blades (16 and 17) are depicted in the embodiment of FIGS. 1-3, it should be appreciated that any other number of cutting blades (*e.g.,* one, two, three, four, five, six, etc.) can be included in the blender blade 10. Likewise, while both the first cutting blade 16 and the second cutting blade 17 are shown in the embodiment of FIG. 1 to extend radially outward from the body 12 and longitudinally upward from a horizontal plane 24 (as shown in FIG. 2) created by the body 12, it should be appreciated that one or both of the cutting blades could extend longitudinally downward from the horizontal plane 24. The first cutting blade 16 and the second cutting blade 17 form a first opposing pair of cutting blades. The cutting blades 16 and 17 are "opposing" in that they are disposed around the body 12 separated by an angular displacement of about 180 degrees.

A transition section 26 exists between the body 12 and each of the cutting blades 16 and 17. The transition sections 26 define the angle at which the cutting blades extend longitudinally from the body 12. The transition section 26 has a width W₁ and generally extends to fully capture the bend transitioning from the body 12 to each of the cutting blades 16 and 17. The width of the transition sections 26 between the body and each of the cutting blades can be the same or they can be different, and ultimately will depend upon the angle at which the cutting blade extends longitudinally from the horizontal plane 24. For example, a transition section 26a includes a first bend 25 and defines the first angle between the body 12 and the first cutting blade 16, and a transition section 26b includes a second bend 27 and defines the second angle between the body 12 and the second cutting blade 17. The first angle and the second angle can be the same or they can be different, and they can be positive angles with respect to the horizontal plane 24, they can negative angles with respect to the horizontal plane 24, or one can be positive and the other can be negative. For example, in accordance with the embodiment of FIG. 2, the transition section 26 defines a first angle θ₁ between the first cutting blade 16 and the body 12, whereby the blade 16 is disposed the angle θ₁ away from the horizontal plane 24, which contains the direction of rotation of the body 12. A second angle θ₂ is defined by the transition section 26 between the second cutting blade 17 and the body 12, whereby the blade 17 is disposed the angle θ₂ away from the horizontal plane 24. In the embodiment of FIG. 2, the first angle θ₁ is different than the second angle θ₂.

Returning to FIG. 1, the transition section 26 includes a gusset 30. The gusset 30 may generally provide reinforcement to the blender blade 10 and decrease the opportunity for the cutting blades 16 and 17 to deform at high speeds. When the blender blade 10 is rotating at high speeds, such as for blending, centrifugal forces are acting on the cutting blades. These centrifugal forces on the cutting blades can act to deform the blades *(e.g.,* bend them away from their preset angles θ). The gusset 30 may generally strengthen the cutting blades 16 and 17 at the transition section 26, where the preformed bends in the blades may present the weakest portion of the blender blade 10. In other words, the gusset 30 can help to make the cutting blades 16 and 17 stiffer and reduce the amount of bending when rotating at high speeds.

The gusset 30 in the embodiment of FIG. 1 has a generally circular shape. It should be appreciated, however, that the gusset may have other shapes, such as square, rectangular, polygonal, elliptical, and the like. The generally circular shape of the gusset can have a radius that is about 0.5 to about 2 times a thickness of the cutting blade; specifically about 1 times the thickness. For example, for a blender blade 10 having a cutting blade thickness of about 2 millimeters (mm), the gusset 30 may have a radius of about 1 mm to about 4 mm; specifically about 2 mm. The gusset 30 can be disposed on the first bend 25 and on the second bend 27 of the transition sections 26a-b. The gusset 30 has a base portion 32 and a top portion 34 that forms a raised portion on the top surface 50. The base portion 32 is wider than the top portion 34, with the top portion tapering to a generally flat surface, such that a cross-section of the gusset 30 has a generally trapezoidal outline. The gusset 30 extends the width W₁ of the transition section 26. In some embodiments, such as depicted in FIG. 1, a first portion 36 of the gusset 30 extends into the body 12 and a second portion 38 extends into the cutting blade face 22. However, the first portion 36 should not extend so far into the body 12 as to inhibit connection of the blender blade 10 to a hub of a blade assembly. In order to avoid interference with components of this connection, such as from a nut or a washer, in one embodiment, the first portion 36 is at least about 5 mm from a center of the aperture 14. The gusset 30 may have a thickness, as measured from the base portion 32 to the top portion 34, of about 0.5 mm to about 2.5 mm; specifically about 1 mm to about 2 mm.

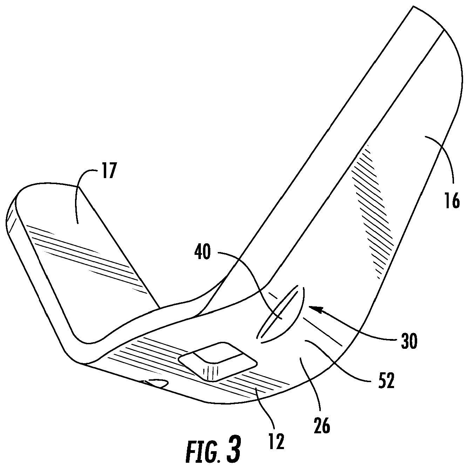

In one embodiment, the gusset 30 may be disposed on a top surface 50 of the transition section 26 by any means of attachment, such as, for example, welding. In another embodiment, the body 12, the cutting blades 16 and 17, and the transition sections 26a-b are formed of a contiguous piece of metal, and the gusset 30 is integrally formed on at least the transition sections 26a-b of the metal. The gusset 30 then includes a raised portion on the top surface 50 of the transition section 26 and a cavity 40 on a bottom surface 52 of the transition section (as shown in FIG. 3). The gusset 30 may be integrally formed on the blender blade 10 by any known means for shaping metal, such as, for example, embossing. In one embodiment, the gusset 30 is formed after the contiguous metal piece is bent to form the transition section 26 and define the cutting blades 16 and 17.

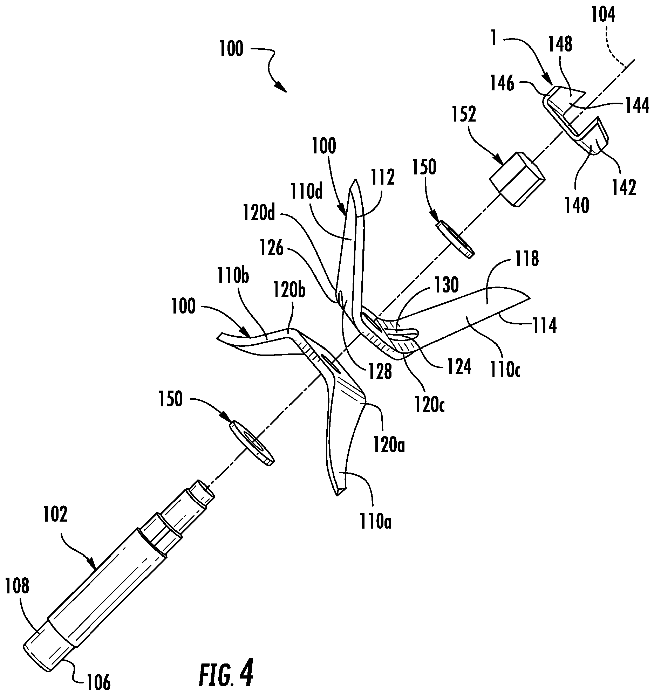

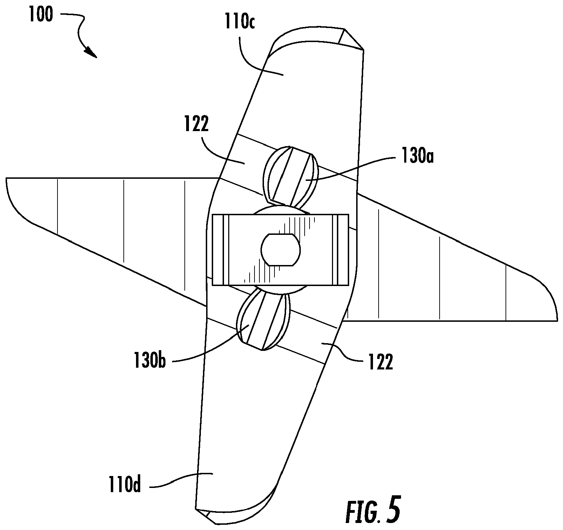

A blade assembly 100 made in accordance with an embodiment of the present disclosure is illustrated in FIGS. 4 and 5. The blade assembly 100 may be of any appropriate shape, size, type or configuration. The blade assembly 100 may be utilized for any appropriate purpose. For example, the blade assembly 100 may be utilized in a blending apparatus to make a blended beverage, such as a drink made with a portion of liquid and a portion of ice, or the like. The blade assembly 100 may be utilized within any appropriate blender container (not shown). The blender container may be of any appropriate shape, size, type or configuration. For example, the blender container may be a container having a narrow base or a container having a wide base.

The blade assembly 100 includes a hub 102 having a central axis about which the blade assembly rotates. The hub 102 is a generally cylindrical axle. However, the hub 102 alternatively may be implemented using any other appropriate shape and/or structure, *e.g.,* conical, and the like. The hub 102 has a central axis 104 about which the blade assembly is adapted to rotate. The hub 102 includes a bottom section 106. The bottom section 106 may include threads 108 enabling the hub 102 to be screwed into a foundation and/or container (not shown).

The blade assembly 100 further includes a plurality of cutting blades 110 extending radially outward at an angle from the hub 102. Each of the cutting blades 110a-d has a sharp cutting edge 112, a blunt spine edge 114, and a cutting blade face 118 therebetween. In general, two or more of the cutting blades 110a-d may be included in pairs. Furthermore, one or more of the cutting blades 1 10a-d generally can extend both radially outward from the hub 102 and longitudinally upward or longitudinally downward along the hub 102. For example, in accordance with the embodiment of FIG. 4, the cutting blades 110a-d can include a first pair of opposing cutting blades 110a, 110b extending radially outward from the hub 102 and longitudinally downward along the hub 102, as well as a second pair of opposing cutting blades 110c, 110d extending radially outward from the hub 102 and longitudinally upward along the hub 102. The first pair of opposing cutting blades 110a, 110b are "opposing" in that they are disposed around the hub 102 separated by an angular displacement of about 180 degrees. The second pair of opposing cutting blades 110c, 110d likewise are "opposing" in that they are disposed around the hub 102 separated by an angular displacement of about 180 degrees. As depicted in FIGS. 4 and 5, the first pair of opposing cutting blades 110a, 110b and the second pair of opposing cutting blades 110c, 110d are disposed around the hub 102 separated from each other by an angular displacement of about 90 degrees.

Although four cutting blades 110a-d are depicted in the exemplary embodiment of FIGS. 4 and 5, it should be appreciated that any other number of cutting blades 110a-d (*e.g.,* two, three, five, six, etc.) alternatively can be included in the blade assembly 100. Furthermore, although the cutting blades 110a-d are generally separated by about 90 degree increments in the example embodiment of FIGS. 4 and 5, it should be appreciated that the cutting blades 110a-d alternatively can be separated by any other suitable amount(s), which may be a uniform or variable amount among the plurality of cutting blades 110a-d.

In addition to the cutting blades 110a-d, the blade assembly 100 further includes a plurality of transition sections 120 located between the hub 102 and the plurality of cutting blades 110. Each of the transition sections 120a-d define the angle at which each of the cutting blades extend longitudinally downward (in the case of blades 110a, 110b) or longitudinally upward (in the case of blades 110c, 110d). In other words, the bends in the blade assembly 100 forming the angles of each of the cutting blades 110a-d exists in the transition sections 120a-d.

A gusset 130, as described above, is integrally formed on at least one of the plurality of transition sections 120. In the embodiment of FIG. 5, gussets 130a, 130b are shown on a top surface 122 of transition sections 120c, 120d. The gussets 130a-b form a raised portion 124 on the top surface 122 and a cavity 126 on the bottom surface 128 (show in FIG. 4). Although two gussets 130a-b are depicted in the exemplary embodiment of FIG. 5, it should be appreciated that any other number of gussets 130 (*e.g.,* one, two, three, four, etc.) alternatively can be included in the blade assembly 100. While the gussets 130a-b are integrally formed on the upper pair of cutting blades 110c, 110d, gussets could also be likewise formed on the lower pair of cutting blades 110a, 110b.

In addition to the cutting blades 110a-d and the transition sections 120a-d, the blade assembly 100 can include at least one crushing blade 140 extending longitudinally outwardly from the hub 102 (*e.g*., vertically upward, as oriented in FIG. 4). Each crushing blade 142 has a first edge 144, a second edge 146, and a crushing blade face 148 therebetween. In the example embodiment of FIGS. 4 and 5, two crushing blades 142 are disposed around the hub 102 separated by an angular displacement of about 180 degrees. The two crushing blades 142 are substantially parallel to each other, as depicted. The crushing blade face 148 of each crushing blade 142 can be substantially flat and each can have a top edge that is sloped (*e.g.,* by 45 degrees, or any other amount) relative to a plane containing a direction of rotation of the blade assembly 100. It should be noted that the first edge 144 and second edge 146 represent smaller dimensions of the blade, while the crushing blade face 148 is a relatively substantially greater dimension, as would be interpreted in accordance with the customary labels for these parts of a knife blade or similar structure.

The blade assembly 100 further includes components for securing the plurality of cutting blades 110 and optional crushing blades 140 to the hub 102. While the embodiment of FIG. 4 depicts a plurality of washers 150 and a blade nut 152 for securing the blades together and to the hub 102, it should be appreciated that any alternative method of securing the blades to the hub is applicable.

Having thus described several aspects of at least one embodiment, it is to be appreciated various alterations, modifications, and improvements will readily occur to those skilled in the art. Such alterations, modifications, and improvements are intended to be part of this disclosure as long as they fall within the scope of the appended claims.

Accordingly, the foregoing description and drawings are by way of example only.

## Claims

1. A blender blade (10), comprising:
a body (12) having an aperture (14);
at least one cutting blade (16, 17) extending outwardly at an angle from the body (12), the cutting blade (16, 17) having a sharp edge (18), a blunt edge (20), and a cutting blade face (22) therebetween; and
a transition section (26) between the body (12) and the cutting blade (16, 17) defining the angle at which the cutting blade (16, 17) extends outwardly from the body (12) **characterized in that** the transition section (26) includes a gusset (30).

2. The blender blade (10) of claim 1, wherein the gusset (30) has a generally circular shape.

3. The blender blade (10) of claim 2, wherein a radius of the gusset (30) is equal to or greater than a thickness of the transition section (26).

4. The blender blade (10) of claim 1, wherein the body (12), the cutting blade (16, 17), and the transition section (26) are formed from a contiguous piece of metal.

5. The blender blade (10) of claim 4, wherein the gusset (30) is integrally formed on the transition section (26).

6. The blender blade (10) of claim 5, wherein the gusset (30) comprises a raised portion on a top surface (50) of the transition section (26).

7. The blender blade (10) of claim 6, wherein the gusset (30) comprises a cavity (40) on a bottom surface (52) of the transition section (26).

8. The blender blade (10) of claim 1, wherein a portion of the gusset (30) extends into the cutting blade face (22).

9. The blender blade (10) of claim 1, wherein a portion of the gusset (30) extends into the body (12).

10. The blender blade (10) of claim 9, wherein the portion of the gusset (30) is at least five millimeters from the aperture (14).

11. The blender blade (10) according to any one of claims 1 to 10, comprising:
a first cutting blade (16) extending outwardly at a first angle from the body (12);
a first transition section (26a) between the body (12) and the first cutting blade (16);
a second cutting blade (17), opposite the first cutting blade (16), extending outwardly at a second angle from the body (12);
(17); a second transition section (26b) between the body (12) and the second cutting blade
a first gusset (30) disposed on the first transition section (26a); and
a second gusset (30) disposed on the second transition section (26b).

12. The blender blade (10) of claim 11, wherein the body (12), the first cutting blade (16), the first transition section (26a), the second cutting blade (17), and the second transition section (26b) are formed from a contiguous piece of metal.

13. The blender blade (10) of claim 11, wherein the first transition section (26a) includes a first bend defining the first angle and the second transition section (26b) includes a second bend defining the second angle.

14. A blade assembly (100) for a blender, comprising: a hub (102) having a central axis about which the blade assembly (100) rotates; a plurality of cutting blades (110) extending radially outwardly at an angle from the hub (102), each of the cutting blades (110) having a sharp cutting edge, a blunt spine edge, and a cutting face therebetween; a plurality of transition sections (120) between the hub (102) and the plurality of cutting blades (110) defining the angle at which the plurality of cutting blades (110) extend outwardly from the hub (102); and a gusset (130) integrally formed on at least one of the plurality of transition sections (120).

15. The blade assembly (100) of claim 14, further comprising at least one crushing blade (140) extending longitudinally outwardly from the hub (102) having a first edge (144), a second edge (146), and crushing blade face (148) therebetween.

## Patentansprüche

1. Mixermesser (10), das Folgendes umfasst:
einen Körper (12) mit einer Öffnung (14);
mindestens ein Schneidmesser (16, 17), das sich in einem Winkel vom Körper (12) nach außen erstreckt, wobei das Schneidmesser (16, 17) eine scharfe Kante (18), eine stumpfe Kante (20) und eine Schneidmesserseite (22) dazwischen aufweist; und
einen Übergangsbereich (26) zwischen dem Körper (12) und dem Schneidmesser (16, 17), der den Winkel definiert, in dem sich das Schneidmesser (16, 17) vom Körper (12) nach außen erstreckt, **dadurch gekennzeichnet, dass** der Übergangsbereich (26) ein Verstärkungsblech (30) beinhaltet.

2. Mixermesser (10) nach Anspruch 1, wobei das Verstärkungsblech (30) im Allgemeinen eine Kreisform aufweist.

3. Mixermesser (10) nach Anspruch 2, wobei ein Radius des Verstärkungsblechs (30) gleich oder größer als eine Dicke des Übergangsbereichs (26) ist.

4. Mixermesser (10) nach Anspruch 1, wobei der Körper (12), das Schneidmesser (16, 17) und der Übergangsbereich (26) aus einem durchgehenden Metallstück gebildet sind.

5. Mixermesser (10) nach Anspruch 4, wobei das Verstärkungsblech (30) integral auf dem Übergangsbereich (26) gebildet ist.

6. Mixermesser (10) nach Anspruch 5, wobei das Verstärkungsblech (30) auf einer oberen Fläche (50) des Übergangsbereichs (26) einen erhöhten Abschnitt umfasst.

7. Mixermesser (10) nach Anspruch 6, wobei das Verstärkungsblech (30) auf einer unteren Seite (52) des Übergangsbereichs (26) einen Hohlraum (40) umfasst.

8. Mixermesser (10) nach Anspruch 1, wobei sich ein Abschnitt des Verstärkungsblechs (30) in die Schneidmesserseite (22) erstreckt.

9. Mixermesser (10) nach Anspruch 1, wobei sich ein Abschnitt des Verstärkungsblechs (30) in den Körper (12) erstreckt.

10. Mixermesser (10) nach Anspruch 9, wobei der Abschnitt des Verstärkungsblechs (30) mindestens fünf Millimeter von der Öffnung (14) entfernt ist.

11. Mixermesser (10) nach einem der Ansprüche 1 bis 10, das Folgendes umfasst:
ein erstes Schneidmesser (16), das sich in einem ersten Winkel vom Körper (12) nach außen erstreckt;
einen ersten Übergangsbereich (26a) zwischen dem Körper (12) und dem ersten Schneidmesser (16);
ein zweites Schneidmesser (17) gegenüber dem ersten Schneidmesser (16), das sich in einem zweiten Winkel vom Körper (12) nach außen erstreckt;
einen zweiten Übergangsbereich (26b) zwischen dem Körper (12) und dem zweiten Schneidmesser (17);
ein erstes Verstärkungsblech (30), das auf dem ersten Übergangsbereich (26a) angeordnet ist; und
ein zweites Verstärkungsblech (30), das auf dem zweiten Übergangsbereich (26b) angeordnet ist.

12. Mixermesser (10) nach Anspruch 11, wobei der Körper (12), das erste Schneidmesser (16), der erste Übergangsbereich (26a), das zweite Schneidmesser (17) und der zweite Übergangsbereich (26b) aus einem durchgehenden Metallstück gebildet sind.

13. Mixermesser (10) nach Anspruch 11, wobei der erste Übergangsbereich (26a) eine erste Biegung beinhaltet, die den ersten Winkel definiert, und der zweite Übergangsbereich (26b) eine zweite Biegung beinhaltet, die den zweiten Winkel definiert.

14. Messeranordnung (100) für einen Mixer, die Folgendes umfasst: eine Nabe (102) mit einer Mittelachse, um die sich die Messeranordnung (100) dreht, eine Vielzahl von Schneidmessern (110), die sich in einem Winkel von der Nabe (102) radial nach außen erstrecken, wobei jedes der Schneidmesser (110) eine scharfe Schneidkante, eine stumpfe Rückenkante und eine Schneidseite dazwischen aufweist, eine Vielzahl von Übergangsbereichen (120) zwischen der Nabe (102) und der Vielzahl von Schneidmessern (110), die den Winkel definieren, in dem sich die Vielzahl von Schneidmessern (110) von der Nabe (102) nach außen erstrecken; und ein Verstärkungsblech (130), das auf mindestens einem der Vielzahl von Übergangsbereichen (120) integral gebildet ist.

15. Messeranordnung (100) nach Anspruch 14, die ferner mindestens ein Zerkleinerungsmesser (140) umfasst, das sich von der Nabe (102) längs nach außen erstreckt und eine erste Kante (144), eine zweite Kante (146) und eine Zerkleinerungsmesserseite (148) dazwischen aufweist.

## Revendications

1. Lame de mélangeur (10) comprenant :
un corps (12) ayant une ouverture (14) ;
au moins une lame de coupe (16, 17) s'étendant vers l'extérieur à un angle par rapport au corps (12), la lame de coupe (16, 17) ayant un bord tranchant (18), un bord émoussé (20) et une face de lame de coupe (22) entre eux ; et
une section de transition (26) entre le corps (12) et la lame de coupe (16, 17) définissant un angle auquel la lame de coupe (16, 17) s'étend vers l'extérieur à partir du corps (12), **caractérisée en ce que** la section de transition (26) comprend un soufflet (30).

2. Lame de mélangeur (10) selon la revendication 1, dans laquelle le soufflet (30) a une forme généralement circulaire.

3. Lame de mélangeur (10) selon la revendication 2, dans laquelle un rayon du soufflet (30) est égal ou supérieur à une épaisseur de la section de transition (26).

4. Lame de mélangeur (10) selon la revendication 1, dans laquelle le corps (12), la lame de coupe (16, 17) et la section de transition (26) sont formés à partir d'une pièce de métal contiguë.

5. Lame de mélangeur (10) selon la revendication 4, dans laquelle le soufflet (30) est formé, de manière solidaire, sur la section de transition (26).

6. Lame de mélangeur (10) selon la revendication 5, dans laquelle le soufflet (30) comprend une partie relevée sur une surface supérieure (50) de la section de transition (26).

7. Lame de mélangeur (10) selon la revendication 6, dans laquelle le soufflet (30) comprend une cavité (40) sur une surface inférieure (52) de la section de transition (26).

8. Lame de mélangeur (10) selon la revendication 1, dans laquelle une partie du soufflet (30) s'étend dans la face de lame de coupe (22).

9. Lame de mélangeur (10) selon la revendication 1, dans laquelle une partie du soufflet (30) s'étend dans le corps (12) .

10. Lame de mélangeur (10) selon la revendication 9, dans laquelle la partie du soufflet (30) est à au moins cinq millimètres de l'ouverture (14).

11. Lame de mélangeur (10) selon l'une quelconque des revendications 1 à 10, comprenant :
une première lame de coupe (16) s'étendant vers l'extérieur à un premier angle du corps (12) ;
une première section de transition (26a) entre le corps (12) et la première lame de coupe (16) ;
une seconde lame de coupe (17) opposée à la première lame de coupe (16), s'étendant vers l'extérieur à un second angle, du corps (12) ;
une seconde section de transition (26b) entre le corps (12) et la seconde lame de coupe (17) ;
un premier soufflet (30) disposé sur la première section de transition (26a) ; et
un second soufflet (30) disposé sur la seconde section de transition (26b).

12. Lame de mélangeur (10) selon la revendication 11, dans laquelle le corps (12), la première lame de coupe (16), la première section de transition (26a), la seconde lame de coupe (17) et la seconde section de transition (26b) sont formés à partir d'une pièce de métal contiguë.

13. Lame de mélangeur (10) selon la revendication 11, dans laquelle la première section de transition (26a) comprend un premier coude définissant le premier angle et la seconde section de transition (26b) comprend un second coude définissant le second angle.

14. Ensemble de lames (100) pour un mélangeur comprenant : un moyeu (102) ayant un axe central autour duquel l'ensemble de lames (100) tourne ; une pluralité de lames de coupe (110) s'étendant radialement vers l'extérieur à un angle, à partir du moyeu (102), chacune des lames de coupe (110) ayant un bord de coupe tranchant, un bord d'épine émoussé et une face de coupe entre eux ; une pluralité de sections de transition (120) entre le moyeu (102) et la pluralité de lames de coupe (110) définissant l'angle auquel la pluralité de lames de coupe (110) s'étendent vers l'extérieur à partir du moyeu (102) ; et un soufflet (130) formé, de manière solidaire, sur au moins l'une de la pluralité de sections de transition (120).

15. Ensemble de lames (100) selon la revendication 14, comprenant en outre au moins une lame de broyage (140) s'étendant longitudinalement vers l'extérieur à partir du moyeu (102) ayant un premier bord (144), un second bord (146), et une face de lame de broyage (148) entre eux.
